# FASCICULE DE BREVET EUROPEEN

(11) **EP 0 495 693 B1**
(45) Date de publication et mention de la délivrance du brevet: **27.12.1995**
(21) Numéro de dépôt: 92400042.5
(22) Date de dépôt: 08.01.1992
(51) Int. Cl.: G01P 3/489

(54) **Procédé pour évaluer une vitesse, notamment la vitesse angulaire d'une roue de véhicule, et dispositif de maîtrise du glissement de roue**
Geschwindigkeitsauswertungsverfahren, insbesondere für die Winkelgeschwindigkeit eines Kraftfahrzeugrades, und Radschlupf-Steuerungsvorrichtung
Method to evaluate a speed, in particular an angular speed of a vehicle wheel, and a wheel slip control device

(30) Priorité: 16.01.1991 FR 9100433
(43) Date de publication de la demande: 22.07.1992
(73) Titulaire: FAIVELEY TRANSPORT, 93200 Saint-Denis (FR)
(72) Inventeur: Pohu, Martine, F-37000 Tours (FR)
(74) Mandataire: Keib, Gérard

(56) Documents cités:
- EP-A- 0 341 445
- EP-A- 0 401 757
- US-A- 4 451 889
- US-A- 4 763 261
- US-A- 4 811 232

## Description

La présente invention concerne un procédé pour évaluer une vitesse, notamment la vitesse angulaire d'un élément rotatif tel qu'une roue de véhicule en particulier ferroviaire.

La présente invention concerne également un dispositif de maîtrise du glissement de roue, en particulier pour véhicule ferroviaire.

Par "dispositif de maîtrise du glissement de roue" on entend par exemple un dispositif anti-enrayeur permettant de limiter la sous-vitesse des roues au freinage ou encore un dispositif anti-patinage permettant de limiter la sur-vitesse des essieux moteurs ou roues motrices en traction.

Il est connu de mesurer la vitesse angulaire d'un élément rotatif en faisant défiler devant un capteur fixe un ou plusieurs éléments d'influence portés par un rotor solidaire de l'élément rotatif. Connaissant l'écart angulaire entre les éléments d'influence, la vitesse angulaire de l'élément rotatif est égale à la course angulaire entre deux éléments d'influence divisée par le temps écoulé entre les deux derniers signaux successifs.

Ce procédé d'évaluation ne donne pas satisfaction lorsque le résultat de l'évaluation est destiné à être utilisé pour piloter un dispositif de maîtrise du glissement de roue nécessitant une information précise sur des variations rapides, principalement à basse vitesse. Par exemple, au freinage, lorsqu'une roue (ou un essieu dans le cas des véhicules ferroviaires) tend à se bloquer, sa vitesse diminue très rapidement et il faut donc agir très rapidement sur le couple de freinage pour éviter le blocage complet. De même, dans le cas d'un dispositif anti-patinage, la réduction du couple moteur appliqué à un essieu en train de patiner peut entraîner une diminution rapide de sa vitesse. Or la diminution de la vitesse de la roue ou de l'essieu provoque un espacement dans le temps des signaux du détecteur, de sorte que l'intervalle de temps entre les mesures successives s'allonge et devient prohibitif.

On connaît divers procédés permettant d'obtenir pendant ces intervalles de temps des estimations de la vitesse par extrapolation faite en supposant que l'accélération angulaire ou la dérivée de l'accélération angulaire reste constante par rapport aux mesures précédentes.

Toutefois, ces estimations par extrapolation peuvent dans certains cas aboutir à des surévaluations de la vitesse étant donné que, notamment en cas de diminution brusque de la vitesse, l'accélération devient fortement négative sans que cela puisse se déduire des mesures précédentes.

On connaît selon le US - A - 4 811 232 un procédé pour évaluer une vitesse angulaire d'une roue de véhicule au moyen d'un capteur qui génère un signal chaque fois qu'une course prédéterminée a été accomplie par l'élément depuis le signal précédent, et dans lequel on évalue la vitesse chaque fois qu'un signal est enregistré d'après le temps écoulé depuis le signal précédent.

EP-401 757 décrit un procédé de mesure d'une vitesse de rotation, dans lequel un générateur de pulsations est utilisé et lorsque l'intervalle de pulsations produit par le générateur devient long, une valeur estimée de vitesse de rotation est dérivée d'après un tableau, en accord avec un délai de temps qui part de la pulsation précédente.

Le but de l'invention est de pouvoir évaluer une vitesse de façon plus efficace que, suivant les procédés connus, notamment en cas de brusque décélération de l'élément dont la vitesse est à mesurer.

L'invention est définie dans les revendications et est notamment basée sur l'observation que :
- la course parcourue par l'élément depuis le dernier signal reçu est inférieure ou égale à la course prédéterminée parcourue entre deux signaux; et
- par conséquent la vitesse moyenne de l'élément depuis le dernier signal reçu est nécessairement inférieure ou égale à la course prédéterminée divisée par le temps écoulé depuis la réception du dernier signal.
- en phase de décélération, la vitesse instantanée est elle-même inférieure ou égale à la vitesse moyenne depuis une mesure précédente.

L'invention fournit donc un moyen efficace pour définir une valeur maximale possible de la vitesse en l'absence de signaux du capteur.

De préférence, lorsque la durée écoulée depuis le dernier signal dépasse le seuil, on calcule une valeur extrapolée de la vitesse à partir d'évaluations précédentes de la vitesse, et on retient comme évaluation de la vitesse la moins élevée de la valeur extrapolée et de la valeur de substitution.

En effet, si la valeur extrapolée est supérieure à la valeur de substitution, elle est certainement fausse puisque la valeur de substitution est une indication de la valeur maximale possible pour la valeur instantanée en phase de décélération.

De préférence, on génère une base de temps d'échantillonnage et, à la fin de chaque période d'échantillonnage:
- si au moins un signal précité a été enregistré depuis le début de la période, on mesure la fréquence du signal et on en déduit une mesure de la vitesse; et
- si aucun signal n'a été enregistré depuis le début de la période, on prend pour ladite durée le nombre de périodes d'échantillonnage successives pendant lesquelles aucun signal n'a été enregistré.

Selon un autre aspect de l'invention, le dispositif de maîtrise du glissement de roue, en particulier pour véhicule ferroviaire, comprenant des moyens pour évaluer la vitesse de chaque roue ou essieu et un dispositif pour moduler un couple appliqué à chaque roue ou essieu en fonction de sa vitesse et d'une vitesse estimée du véhicule, est caractérisé en ce que les moyens pour évaluer la vitesse de chaque roue ou essieu comprennent pour chaque roue ou essieu:
- des moyens pour produire un signal chaque fois que la roue ou essieu effectue une course angulaire prédéterminée;
- des moyens pour calculer la vitesse de rotation de la roue ou essieu d'après le temps écoulé entre deux signaux; et
- des moyens pour générer sélectivement comme évaluation de la vitesse entre les instants d'enregistrement des signaux, lorsque la durée entre deux signaux dépasse un certain seuil, une valeur de substitution déterminée d'après une durée écoulée sans enregistrement de signaux.

D'autres particularités et avantages de l'invention ressortiront encore de la description ci-après relative à un exemple non limitatif.

Aux dessins annexés :
- la figure 1 est une vue schématique d'un dispositif anti-enrayage pneumatique selon l'invention;
- la figure 2 est un ensemble de diagrammes temporels visualisant le procédé selon l'invention; et
- la figure 3 est un diagramme fonctionnel pour la mise en oeuvre du procédé selon l'invention.

On va maintenant décrire l'invention dans le cadre d'un exemple de dispositif d'anti-enrayage pneumatique.

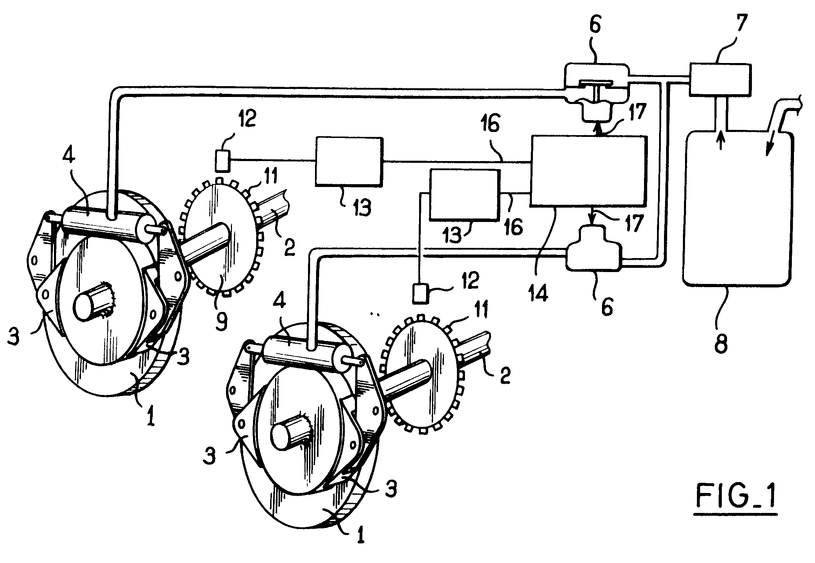

Deux roues 1 de véhicule ferroviaire (figure 1) appartenant à deux essieux différents 2 sont associées chacune à des freins 3 commandés par un vérin pneumatique 4 pour chacune des roues. Chaque verin 4 est alimenté en air comprimé par une électrovalve de régulation pneumatique respective 6 et par un organe commun 7 de commande de la puissance de freinage désirée, à partir d'un réservoir d'air comprimé 8.

Chaque essieu 2 est lié en rotation avec un rotor respectif 9 dont le pourtour comporte des dents 11 régulièrement réparties autour de l'axe de l'essieu 2. Ces dents 11 défilent devant un capteur 12, par exemple une sonde à effet Hall. La sortie fournie par chaque sonde à effet Hall est appliquée à l'entrée d'un dispositif respectif 13 pour l'acquisition numérique de la vitesse de rotation de l'essieu 2.

Les deux dispositifs 13 fournissent sur leur sortie 16 un signal représentatif d'une évaluation de la vitesse de rotation de l'essieu 2 associé.

Un dispositif de pilotage 14 reçoit sur ses entrées les signaux de sortie des dispositifs d'acquisition 13 ainsi qu'éventuellement les signaux de sortie d'autres dispositifs d'acquisition associés à d'autres essieux du véhicule, et il combine ces divers signaux pour obtenir une estimation de la vitesse du véhicule, par rapport à laquelle il détermine si l'un et/ou l'autre des essieux 2 a une vitesse de rotation anormalement basse par rapport à la vitesse du véhicule. Si la réponse à cette question est affirmative, le dispositif de pilotage 14 pilote par ses sorties 17 l'électrovalve de régulation 6 correspondant à l'essieu dont la vitesse de rotation est anormalement basse pour réduire la pression pneumatique appliquée au vérin de freinage 4 de cet essieu.

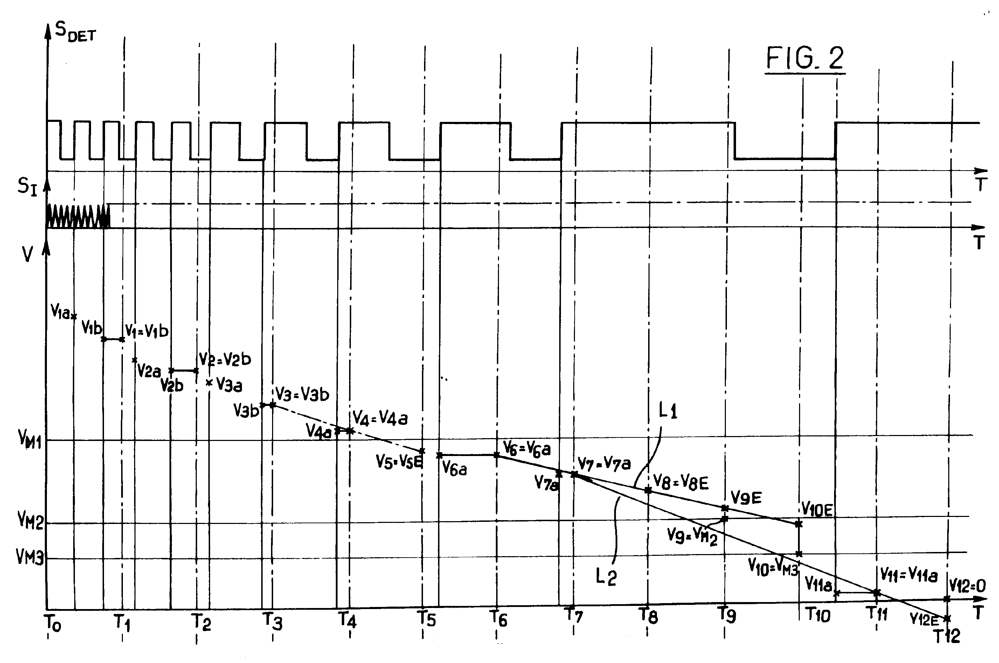

On va maintenant décrire en référence à la figure 2, le procédé qui est mis en oeuvre dans l'un ou l'autre des dispositifs d'acquisition 13 pour produire sur sa sortie 16 un signal correspondant à une évaluation de la vitesse de rotation de l'essieu 2 correspondant à partir des signaux émis par le capteur 12 associé.

On a représenté à la partie supérieure de la figure 2 par une grandeur électrique S_{DET} les signaux émis par le capteur 12 et reçus par le dispositif d'acquisition 13.

Cette grandeur électrique est constituée par une succession d'impulsions rectangulaires. Dans l'exemple représenté, on suppose que la vitesse du véhicule est en train de décroître et par conséquent la fréquence de ces impulsions décroît régulièrement de la gauche vers la droite du diagramme.

Dans la suite, on appellera signal émis par le capteur 12, chaque front montant d'une impulsion rectangulaire. C'est par rapport à ces fronts montants que le dispositif d'acquisition 13 est renseigné sur le défilement des dents 11 devant le capteur 12. Bien entendu, ce choix est arbitraire et on aurait pu aussi faire fonctionner le dispositif 13 par rapport par exemple aux fronts descendants des impulsions.

D'autre part, le dispositif 13 génère de manière interne deux bases de temps:
- l'une représentée par une grandeur électrique S_{I} constituée par une succession d'impulsions de fréquence beaucoup plus élevée que les fréquences probables de la grandeur S_{DET} fournie par le capteur 12; et
- une base de temps d'échantillonnage, dont la période correspond à l'intervalle entre deux traits mixtes verticaux successifs correspondant aux instants T₀, T₁,... T₁₂. Cette période d'échantillonnage correspond sensiblement au temps de réponse voulu pour que le dispositif d'acquisition numérique de la vitesse signale au dispositif de pilotage les variations de la vitesse de rotation de l'essieu 2 associé.

Or, il peut arriver qu'une période d'échantillonnage complète, ou même plusieurs périodes d'échantillonnage complètes successives, comme celles comprises entre T₇ et T₁₀, s'écoulent sans qu'aucun front montant de S_{DET} ne soit enregistré, de sorte que dans ces conditions, qui sont justement celles où un blocage est peut-être en train de se produire, la grandeur S_{DET} ne fournit aucune indication pour actualiser en temps utile l'évaluation de la vitesse angulaire de l'essieu et par conséquent la pression de freinage appliquée au vérin 4.

Le procédé selon l'invention remédie à cet inconvénient. On va maintenant exposer son déroulement en référence à la figure 2.

Le procédé permet dans l'exemple décrit d'évaluer la vitesse à la fin de chaque période d'échantillonnage.

Au cours de la période T₀-T₁, deux fronts montants de S_{DET} sont enregistrés, sans parler du front montant qui, dans l'exemple représenté, coïncide avec T₀.

Lors de l'enregistrement de chaque front montant, on remet à zéro un comptage des impulsions de S_{I}, et on détermine la vitesse moyenne depuis le front montant précédent d'après le nombre d'impulsions de S_{I} qui ont été comptées depuis le front montant précédent.

En effet, chaque impulsion de S_{I} correspond à l'écoulement d'une durée élémentaire, de sorte que le nombre d'impulsions de S_{I} correspond à la durée écoulée depuis le front montant précédent. Comme la distance angulaire couverte par l'essieu 2 entre deux fronts montants est connue, il suffit de diviser cette distance angulaire par le temps écoulé pour obtenir la vitesse de rotation de l'essieu 2.

On obtient ainsi, pour les deux fronts montants successifs de la période T₀-T₁ deux valeurs de la vitesse, appelées V₁ₐ et V_{1b}.

On prend comme évaluation V₁ de la vitesse à l'instant T₁ la valeur correspondant au dernier front montant de la période qui vient de s'écouler. Donc, V₁ = V_{1b}.

Au cours des périodes suivantes, T₁-T₂ et T₂-T₃, on a à chaque fois deux fronts montants de la grandeur S_{DET}, donnant dans chaque cas deux mesures de la vitesse V₂ₐ et V_{2b}, V₃ₐ et V_{3b}, de sorte que l'on a, à l'instant T₂, V₂ = V_{2b}, et à l'instant T₃, V₃ = V_{3b}.

Dans la quatrième période T₃-T₄, un seul front montant est enregistré, à l'occasion duquel est effectuée une évaluation V₄ₐ de la vitesse qui est prise comme vitesse V₄ à l'instant T₄.

Au cours de la période T₄-T₅, aucun front montant n'est enregistré.

Autrement dit, le temps pendant lequel aucun front montant n'est enregistré est au moins égal à un certain seuil, c'est-à-dire la durée de la période d'échantillonnage.

On effectue dans ce cas, selon le procédé, une première évaluation par extrapolation linéaire. Autrement dit, comme représenté, on trace la droite passant par les deux dernières valeurs mesurées V₃ et V₄ retenues pour les instants T₃ et T₄ respectivement et on obtient ainsi une valeur V_{5E} là où cette droite passe par l'abscisse T₅.

Mais on ne retient pas directement cette valeur V_{5E} comme étant la valeur V₅ à l'instant T₅.

En effet, comme une période d'échantillonnage complète s'est écoulée sans apparition de front montant dans la grandeur S_{DET}, la distance angulaire parcourue par l'essieu 2 pendant cette durée est inférieure à l'écart angulaire entre deux dents 11 du rotor 9, et par conséquent la vitesse angulaire de l'essieu 2 est inférieure à une valeur V_{M1} qui est égale à l'écart angulaire entre deux dents 11 divisé par la période d'échantillonnage. On a représenté l'ordonnée V_{M1} par une droite horizontale à la figure 2. On voit qu'à l'instant T₅, la valeur extrapolée V_{5E} est réaliste puisqu'elle est inférieure à la valeur maximale V_{M1} de la vitesse moyenne pendant la période T₄-T₅. On retient donc pour l'évaluation V₅ à l'instant T₅, la valeur V_{5E}. Pendant les périodes T₅-T₆ et T₆-T₇, on a de nouveau, dans chacune d'elles, un front montant qui permet de prendre pour V₆ à l'instant T₆ la valeur V₆ₐ et pour la valeur V₇ à l'instant T₇ la valeur V₇ₐ.

Période T₇-T₈: aucun front montant n'est relevé, on détermine la valeur extrapolée V_{8E} en prolongeant une droite L1 passant par les deux dernières valeurs mesurées V₆ à l'instant T₆ et V₇ à l'instant T₇. La valeur V_{8E} est inférieure à V_{M1}, elle est donc correcte et on prend pour l'évaluation V₈ à l'instant T₈ la valeur V_{8E}.

Période T₈-T₉: deuxième période successive sans front montant. On détermine la valeur extrapolée V_{9E} en prolongeant la droite L1 passant par les points V₆, T₆ et V₇, T₇. Mais, comme il s'est écoulé deux périodes successives sans front montant, la vitesse angulaire de l'essieu 2 est au plus égale à l'écart angulaire entre deux dents 11 divisé par deux fois la période d'échantillonnage. On appelle V_{M2} cette valeur maximale qui est d'ailleurs égale à V_{M1}/2. On voit que la valeur V_{9E} obtenue par extrapolation n'est pas réaliste car elle est supérieure à la valeur maximale V_{M2} de la vitesse moyenne pendant les deux dernières périodes. On prend donc pour l'évaluation V₉ de la vitesse de l'essieu à l'instant T₉ la valeur V_{M2}.

Période T₉-T₁₀: troisième période d'échantillonnage successive sans front montant. On calcule la valeur extrapolée V_{10E} en prolongeant encore la droite L1 passant par V₆, T₆ et V₇, T₇. Mais comme il s'est maintenant écoulé trois périodes successives sans front montant, la vitesse moyenne pendant ces trois périodes a une valeur maximale V_{M3} qui est égale à l'écart angulaire entre deux dents 11 divisé par trois fois la période d'échantillonnage. Comme V_{10E} est supérieur à V_{M3}, V_{10E} n'est pas réaliste et on prend pour évaluation V₁₀ de la vitesse à l'instant T₁₀ la valeur V_{M3}.

Période T₁₀-T₁₁: un front montant est enregistré. On prend donc comme évaluation V₁₁ de la vitesse à l'instant T₁₁ la valeur mesurée V₁₁ₐ obtenue par comptage des impulsions depuis le précédent front montant pendant la période T₆-T₇.

Période T₁₁-T₁₂: de nouveau, aucun front montant enregistré. On détermine la valeur extrapolée V_{12E} en prolongeant une droite L2 passant par les deux dernières valeurs de mesure V₇, T₇ et V₁₁, T₁₁. La valeur V_{12E} obtenue n'est pas réaliste par rapport au sens de marche du véhicule puisqu'elle est inférieure à zéro. On prend donc V₁₂ = 0.

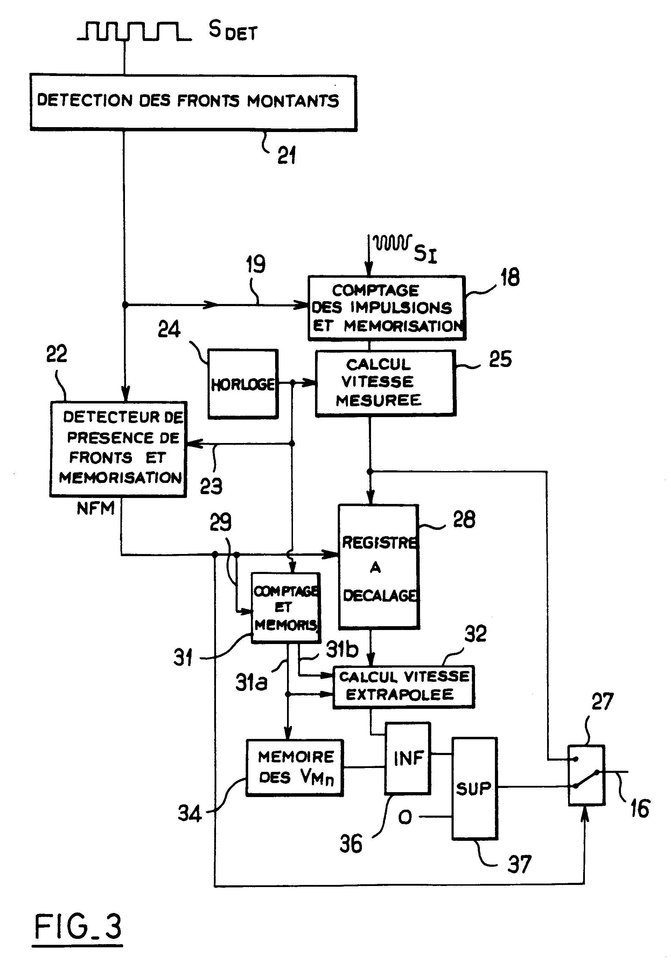

On a représenté à la figure 3 un diagramme fonctionnel.

Un dispositif 18 de comptage des impulsions de la grandeur S_{I} effectue le comptage des impulsions de la grandeur S_{I} et conserve en mémoire le résultat du comptage précédent. Il possède une entrée 19 qui, lorsqu'on lui applique un signal approprié efface le résultat du comptage précédent, le remplace par l'état du comptage en cours et remet le comptage en cours à zéro. Un tel signal est fourni par un dispositif de détection des fronts montants 21 lorsqu'un front montant est détecté dans la grandeur S_{DET}.

Le signal de sortie du dispositif de détection 21 est en outre appliqué à l'entrée d'un détecteur de présence de fronts montants et mémorisation 22 qui détecte la présence de fronts montants dans chaque période d'échantillonnage et conserve en mémoire le résultat de la détection lors de la période précédente. Le dispositif 22 fournit un signal sur sa sortie lorsque sa détection mémorisée indique la présence d'au moins un front dans la période d'échantillonnage précédente.

Une horloge d'échantillonnage 24 fournit à la fin de chaque période d'échantillonnage un signal qui est appliqué à une entrée de commande 23 du dispositif de détection et mémorisation 22 pour effacer le résultat de la détection précédente, prendre comme résultat de la détection précédente l'état de la détection en cours, et mettre à zéro la détection en cours. Le même signal de sortie de l'horloge 24 provoque dans un étage 25 le calcul de la vitesse mesurée, à partir du résultat du comptage mémorisé dans le dispositif de comptage et mémorisation 18. Si au moins un front montant a été détecté pendant la précédente période d'échantillonnage, le calcul de vitesse mesurée effectué par le dispositif 25 donne un résultat actualisé puisque le "au moins un front montant" en question a, par l'entrée 19 du dispositif 18 provoqué l'actualisation du comptage des impulsions mémorisé. Dans ces conditions la sortie du dispositif 22 commande des moyens, schématisés par un relais 27, pour que la sortie de l'étage de calcul 25 soit reliée à la sortie 16 du dispositif d'acquisition de vitesse.

La sortie du dispositif 22 commande également l'entrée du résultat fourni par l'étage 25 dans un registre à décalage 28 qui conserve en mémoire les deux dernières évaluations de l'étage 25. Lors de cette entrée dans le registre 28, la nouvelle valeur remplace la plus récente des deux valeurs précédentes, qui à son tour remplace la plus ancienne des deux précédentes, laquelle est effacée.

En outre, le signal de sortie du dispositif 22 est appliqué à une entrée 29 d'un étage 31 de comptage des périodes d'échantillonnage successives sans front montant et de mémorisation du résultat du comptage précédent. Lorsque le dispositif 22 applique un signal à l'entrée 29, l'état du comptage est mis en mémoire à la place du résultat précédemment mémorisé, puis est remis à zéro. L'état du comptage et le résultat mémorisé sont disponibles sur des sorties 31a et respectivement 31b de l'étage 31.

Un étage de calcul 32 calcule la valeur extrapolée de la vitesse à la fin d'une période p en prenant en compte les deux évaluations contenues dans le registre à décalage 28 ainsi que l'état du comptage et le résultat de comptage mémorisé disponibles sur les sorties 31a et 31b, qui indiquent respectivement le nombre de périodes d'échantillonnage écoulés depuis la plus récente des valeurs du registre 28 et le nombre de périodes d'échantillonnage qui séparent les deux valeurs du registre à décalage 28.

De son côté, le dispositif de comptage 31, qui fournit sur sa sortie 31a le nombre de périodes d'échantillonnage successives sans front montant appelle ainsi dans une mémoire 34 dans laquelle sont stockées les valeurs maximales V_{Mn} de la vitesse moyenne pour chacun des nombres n de périodes d'échantillonnage successives sans front montant, la valeur maximale correspondant à l'état du comptage. Cette valeur est fournie à l'entrée d'un étage de comparaison 36 où elle est comparée avec le résultat, appliqué à l'autre entrée du dispositif de comparaison 36, fournie par l'étage de calcul 32 de la valeur extrapolée. Le dispositif de comparaison 36 fournit sur sa sortie la plus faible des deux valeurs présentes sur ses entrées, et cette plus faible valeur est appliquée à une entrée d'un deuxième dispositif de comparaison 37, à l'autre entrée duquel est appliqué le niveau zéro. Le dispositif de comparaison 37 retient la plus élevée des deux valeurs appliquées sur ses entrées, de manière à éliminer les valeurs négatives qui pourraient être retenues par l'étage de comparaison 36, comme exposé plus haut en ce qui concerne l'instant T₁₂ à la figure 2.

Quand le résultat de détection mémorisé dans le dispositif 22 est égal à zéro, le dispositif 22 ne fournit aucun signal, de sorte que le relais 27 relie la sortie 16 du dispositif d'acquisition avec la sortie du comparateur 37. Le registre à décalage 28 n'est pas activé et ne prend donc pas en compte le calcul effectué par l'étage 25. D'autre part, toujours en l'absence de signal à la sortie du dispositif 22, le dispositif de comptage 31 n'est pas remis à zéro, de sorte que son signal de sortie est incrémenté de "un".

Bien entendu, l'invention n'est pas limitée aux exemples décrits et représentés, et de nombreux aménagements peuvent être apportés à cet exemple sans sortir du cadre de l'invention.

Pour l'extrapolation, au lieu de la loi d'accélération constante retenue dans l'exemple, on pourrait adopter une loi à dérivée constante de l'accélération.

On peut aussi, par prudence, choisir pour V_{M1}, V_{M2}, V_{M3} des valeurs plus faibles que celles résultant des calculs effectués plus haut. On peut également calculer ces valeurs d'après le nombre d'impulsions depuis le dernier front montant et/ou en prenant également en compte d'autres variables que le temps écoulé.

L'invention est applicable aux anti-enrayeurs autres que pneumatiques, en particulier hydrauliques, électriques etc.

## Revendications

1. Procédé pour évaluer une vitesse, notamment la vitesse angulaire d'un élément rotatif (1, 2) tel qu'une roue de véhicule en particulier ferroviaire au moyen d'un capteur (12) qui génère un signal (S_{DET}) chaque fois qu'une course prédéterminée a été accomplie par l'élément depuis le signal précédent, caractérisé en ce qu' on évalue la vitesse chaque fois qu'un signal est enregistré d'après le temps écoulé depuis le signal précédent, tandis que si une durée écoulée depuis le dernier signal enregistré dépasse un seuil prédéterminé, on prend au moins dans certains cas comme valeur de la vitesse une valeur de substitution (V_{M1}, V_{M2}, V_{M3},... V_{Mn}) qui est fonction de ladite durée et de la course prédéterminée, ladite valeur de substitution étant déterminée d'après une durée écoulée sans enregistrement de signaux et on calcule une valeur extrapolée de la vitesse (V_{5E}, V_{8E}, V_{9E}, V_{10E}) à partir d'évaluations précédentes de la vitesse, et on retient comme évaluation de la vitesse la moins élevée (V_{5E}, V_{8E}, V_{M2}, V_{M3}) de la valeur extrapolée et de la valeur de substitution.

2. Procédé conforme à la revendication 1, caractérisé en ce qu'on calcule la valeur extrapolée (V_{5E}, V_{8E}, V_{9E}, V_{10E}, V_{12E}) par extrapolation linéaire à partir des deux dernières mesures de la vitesse (V_{3b}, V₄ₐ ; V₆ₐ, V₇ₐ ; V₇ₐ, V₁₁ₐ).

3. Procédé conforme à la revendication 1 ou 2, caractérisé en ce qu'on utilise comme valeurs de substitution des valeurs prédéterminées (V_{M1}, V_{M2}, V_{M3}) mises en mémoire (34) que l'on sélectionne en fonction de ladite durée.

4. Procédé conforme à l'une des revendications 1 à 3, caractérisé en ce qu'on prend comme valeur de substitution (V_{M1}, V_{M2}, V_{M3}) la valeur de ladite course divisée par ladite durée.

5. Procédé conforme à la revendication 4, caractérisé en ce qu'on génère une base de temps d'échantillonnage et, à la fin de chaque période d'échantillonnage:
- si au moins un signal précité a été enregistré depuis le début de la période, on mesure la fréquence du signal et on en déduit une mesure de la vitesse; et
- si aucun signal n'a été enregistré depuis le début de la période, on prend pour ladite durée le nombre de périodes d'échantillonnage successives pendant lesquelles aucun signal n'a été enregistré.

6. Procédé conforme à la revendication 5, caractérisé en ce que la valeur de substitution est déterminée en fonction d'une seule variable, à savoir le nombre de périodes d'échantillonnage successives pendant lesquelles aucun signal n'a été enregistré.

7. Dispositif de maîtrise du glissement de roue utilisant des moyens de mise en oeuvre d'un procédé d'évaluation d'une vitesse, caractérisé en ce qu'il comporte un dispositif (14) pour moduler un couple appliqué à chaque roue ou essieu dont on désire maîtriser le glissement, en fonction de sa vitesse et d'une vitesse estimée du véhicule, ainsi que des moyens pour évaluer la vitesse de chaque roue ou essieu dont on désire maîtriser le glissement, et qui comprennent :
- des moyens (11, 12) pour produire un signal chaque fois que la roue ou essieu effectue une course angulaire prédéterminée ;
- des moyens (25) pour calculer la vitesse de rotation de la roue (1) ou essieu (2) d'après le temps écoulé entre deux signaux ;
- des moyens pour générer sélectivement comme évaluation de la vitesse entre les instants d'enregistrement des signaux, lorsque la durée entre deux signaux dépasse un certain seuil, une valeur de substitution (V_{M1}, V_{M2}, V_{M3},... V_{Mn}) déterminée d'après une durée écoulée sans enregistrement de signaux ; et
- des moyens aptes à calculer une valeur extrapolée de la vitesse (V_{5E}, V_{8E}, V_{9E}, V_{10E}) à partir d'évaluations précédentes de la vitesse, et à retenir comme évaluation de la vitesse la moins élevée (V_{5E}, V_{8E}, V_{M2}, V_{M3}) de la valeur extrapolée et de la valeur de substitution.

## Patentansprüche

1. Verfahren zur Schätzung einer Geschwindigkeit, insbesondere der Winkelgeschwindigkeit eines rotativen Elements (1, 2), wie z.B. eines Fahrzeugrades, insbesondere eines Eisenbahnrades mittels Sensor (12), der immer dann ein Signal aussendet (S_{DET}), wenn seit dem vorhergehenden Signal eine zuvor festgelegte Wegstrecke von dem Element zurückgelegt worden ist, dadurch gekennzeichnet, daß die Geschwindigkeit jedesmal dann schätzt wird, wenn ein Signal nach der seit dem vorhergehenden Signal verstrichene Zeit gespeicherte wurde, währendessen man zumindest in gewissen Fällen für den Geschwindigkeitswert einen Substitutionswert (V_{M1}, V_{M2}, V_{M3}, ... V_{Mn}) einsetzt, falls eine seit dem zuletzt gespeicherten Signal verstrichene Zeit einen bestimmten zuvor festgelegten Grenzwert überschreitet, dieser Substitutionswert von der verstrichenen Zeit der zuvor festgelegten Wegstrecke abhängig ist, wobei der Substitutionswert unter Berücksichtigung einer verstrichenen Zeitdauer, während der keine Signale aufgezeichnet wurden, bestimmt wird und ein extrapolierter Wert der Geschwindigkeit (V_{5E}, V_{8E}, V_{9E}, V_{10E}) mittels zuvor schätzteter Geschwindigkeitswerte berechnet wird, und wobei der niedrigster Geschwindigkeitswert (V_{5E}, V_{8E}, V_{M2}, V_{M3}) des extrapolierten Wertes und des Substitutionswertes als schätzteter Geschwindigkeitswert gewählt wird.

2. Verfahren gemäß Anspruch 1, dadurch gekennzeichnet, daß der extrapolierte Wert (V_{5E}, V_{8E}, V_{9E}, V_{10E}, V_{12E}) mittels linearer Extrapolation unter Berücksichtigung der beiden letzten Geschwindigkeitsmessungen (V_{3b}, V₄ₐ; V₆ₐ, V₇ₐ; V₇ₐ, V₁₁ₐ) berechnet wird.

3. Verfahren gemäß Ansprüche 1 oder 2, dadurch gekennzeichnet, daß für die Substitutionswerte zuvor festgelegte und gespeicherte (34) Werte (V_{M1}, V_{M2}, V_{M3}) verwendet werden, die in Abhängigkeit von der besagten Zeitdauer ausgewählt werden.

4. Verfahren gemäß einem der Ansprüche 1 bis 3, dadurch gekennzeichnet, daß für den Substitutionswert (V_{M1}, V_{M2}, V_{M3}) der Quotient aus dem Wert der besagten Wegstrecke und der besagten Zeitdauer verwendet wird.

5. Verfahren gemäß Anspruch 4, dadurch gekennzeichnet, daß eine Datenbasis mit Stichprobenentnahmezeiten generiert wird und am Ende der einzelnen Stichprobentnahmeintervalle :
- falls seit dem Beginn des Zeitintervalls mindestens ein Signal aufgezeichnet wurde, wird die Frequenz des Signals gemessen und ein Geschwindigkeitswert abgeleitet; und
- falls seit dem Beginn des Zeitintervalls kein Signal aufgezeichnet wurde, wird für die besagte Zeitdauer die Anzahl der aufeinanderfolgenden Stichprobentnahmeintervalle während denen kein Signal aufgezeichnet wurde, ausgewählt.

6. Verfahren gemäß Anspruch 5, dadurch gekennzeichnet, daß der Substitutionswert in Abhängigkeit einer einzigen Variablen bestimmt wird, die der Anzahl der aufeinanderfolgenden Stichprobentnahmeintervalle, während denen kein Signal aufgezeichnet wurde, entspricht.

7. Vorrichtung zur Kontrolle des Radschlupfs mit Hilfe von Einsatzmitteln mit denen ein Verfahren zur Geschwindigkeitsschätzung angewandt werden kann, dadurch gekennzeichnet, daß diese aus einer Vorrichtung (14) bestehen, mit der an jedem Rad bzw. an jeder Achse, an denen eine Schlupfkontrolle durchgeführt werden soll, das Moment verändert werden kann, in Abhängigkeit von seiner (ihrer) Geschwindigkeit und der geschätzten Geschwindigkeit des Fahrzeuges, sowie mit Hilfe von Mitteln zur Schätzung der Geschwindigkeit der einzelnen Räder bzw. jeder Achse, an denen der Schlupf kontrolliert werden soll, bestehend aus :
- Mitteln (11, 12) mit denen jedesmal dann ein Signal erzeugt werden kann, wenn das Rad bzw. die Achse eine zuvor festgelegte Winkelwegstrecke zurückgelegt hat;
- Mitteln (25) zur Berechnung der Rotationsgeschwindigkeit des Rads (1) bzw. der Achse (2) unter Berücksichtigung der Zeit, die zwischen zwei Signalen verstrichen ist;
- Mitteln zur selektiven Generierung, als Schätzung der Geschwindigkeit zwischen den aufgezeichneten Zeit der Signalen, eines Substitutionswertes (V_{M1}, V_{M2}, V_{M3}, ... V_{Mn}), der unter Berücksichtigung einer verstrichenen Zeitdauer während der keine Signale aufgezeichnet werden, bestimmt wird, vorausgesetzt das Zeitintervall zwischen zwei Signalen überschreitet einen bestimmten Grenzwert; und
- Mitteln zur Berechnung eines extrapolierten Geschwindigkeitswertes (V_{5E}, V_{8E}; V_{9E}, V_{10E}) unter Zuhilfenahme von vorhergehenden Geschwindigkeitsschätzungen, und zur Betrachtung als Geschwindigkeitsschätzung der niederigste Geschwindigkeitswert (V_{5E}, V_{8E}, V_{M2}, V_{M3}) des extrapolierten Wertes und des Substitutionswertes.

## Claims

1. A process for evaluating a velocity, especially the angular velocity of a rotating element (1, 2) such as a wheel of a vehicle, particularly a rail vehicle, by means of a sensor (12) which generates a signal (S_{DET}) every time a predetermined displacement has been performed by the element since the previous signal, characterised in that the velocity is evaluated every time a signal is recorded according to the time elapsed since the previous signal, whereas if an amount of time elapsed since the last signal recorded exceeds a predetermined threshold, at least in certain cases a substitution value (V_{M1}, V_{M2}, V_{M3}, ... V_{Mn}) which is a function of said amount of time and the predetermined displacement is taken as the value of the velocity, said substitution value being determined according to an amount of time elapsed without a signal being recorded, and an extrapolated value (V_{5E}, V_{8E}, V_{9E}, V_{10E}) is calculated for the velocity based upon previous evaluations of the velocity, and the lowest value (V_{5E}, V_{8E}, V_{M2}, V_{M3}) from amongst the extrapolated value and the substitution value is kept as the evaluation of the velocity.

2. A process according to claim 1, characterised in that the extrapolated value (V_{5E}, V_{8E}, V_{9E}, V_{10E}, V_{12E}) is calculated through linear extrapolation based upon the last two measurements of the velocity (V_{3b}, V₄ₐ; V₆ₐ, V₇ₐ; V₇ₐ, V₁₁ₐ).

3. A process according to claim 1 or 2, characterised in that predetermined values (V_{M1}, V_{M2}, V_{M3}) stored in memory (34) which are selected according to said amount of time are used as substitution values.

4. A process according to any of claims 1 to 3, characterised in that the value of said displacement divided by said amount of time is taken as the substitution value (V_{M1}, V_{M2}, V_{M3}).

5. A process according to claim 4, characterised in that a sampling time base is generated and, at the end of each sampling period:
- if at least one above-mentioned signal has been recorded since the start of the period, the frequency of the signal is measured and a measurement of the velocity is deduced from it; and
- if no signal has been recorded since the start of the period, the number of successive sampling periods during which no signal has been recorded is taken as said amount of time.

6. A process according to claim 5, characterised in that the substitution value is determined according to a single variable, i.e. the number of successive sampling periods during which no signal has been recorded.

7. A device for controlling wheel slippage using means for working a process for evaluating a velocity, characterised in that it includes a device (14) for modulating a torque applied to each wheel or axle whose slippage needs to be controlled, according to its velocity and an estimated velocity of the vehicle, as well as means for evaluating the velocity of each wheel or axle whose slippage needs to be controlled, which comprise:
- means (11, 12) for producing a signal each time the wheel or axle performs a predetermined angular displacement;
- means (25) for calculating the rotational velocity of the wheel (1) or axle (2) according to the time elapsed between two signals;
- means to selectively generate as an evaluation of the velocity between the instants when the signals are recorded, when the amount of time between two signals exceeds a certain threshold, a substitution value (V_{M1}, V_{M2}, V_{M3}, ... V_{Mn}) determined based upon an amount of time elapsed without a signal being recorded; and
- means suited to calculate an extrapolated value for the velocity (V_{5E}, V_{8E}, V_{9E}, V_{10E}) based upon previous evaluations of the speed, and to keep as the evaluation of the speed the lowest value (V_{5E}, V_{8E}, V_{M2}, V_{M3}) from amongst the extrapolated value and the substitution value.
